# EUROPÄISCHE PATENTSCHRIFT

(11) **EP 2 570 688 B1**
(45) Veröffentlichungstag und Bekanntmachung des Hinweises auf die Patenterteilung: **09.04.2014**
(21) Anmeldenummer: 12184618.2
(22) Anmeldetag: 17.09.2012
(51) Int. Cl.: F16D 1/08

(54) **Vorrichtung zum Festlegen/Festklemmen eines Positionsgebers**
Device for fixing/clamping a positioner
Dispositif de fixation/serrage d'un indicateur de position

(30) Priorität: 15.09.2011 DE 102011053646; 15.09.2011 DE 102011053653
(43) Veröffentlichungstag der Anmeldung: 20.03.2013
(73) Patentinhaber: SIKO GmbH Dr. Ing. G. Wandres, 79256 Kirchzarten/Buchenbach (DE)
(72) Erfinder: Wanders, Horst, 79199 Kirchzarten (DE); Reisacker, Edgar, 79359 Riegel (DE)
(74) Vertreter: Weiss, Peter

(56) Entgegenhaltungen:
- DE-A1- 4 028 158
- DE-A1- 4 112 484
- DE-A1- 4 405 155
- DE-U1-202004 002 771
- GB-A- 2 039 670
- US-A- 5 226 753

## Beschreibung

Die Erfindung betrifft eine Vorrichtung zum Festlegen/Festklemmen eines Positionsgeberes auf einer Welle nach dem Oberbegriff des Anspruchs 1.

### Stand der Technik

Die Festlegung von Gegenstände auf einer Welle geschieht beispielsweise durch Klemmelemente. Diese können mechanisch, pneumatisch, hydraulisch oder elektrisch betätigt werden. Nur beipielsweise wird hier auf eine Klauenkupplung gemäss der DE 93 00 508 U1 verwiesen. Diese besteht aus einem geschlitzten Ring, wobei die Breite des Ringes nach Aufsetzung der Kupplung auf einer Welle durch Zusammenschrauben verkleinert wird, wodurch sich eine Klemmöffnung um die Welle schliesst.

In diesem Zusammenhang wird auf die DE 20 2004 002771 U1 hingewiesen, welche eine Schrumpfscheibenkupplung offenbart, welche eine mit Medium befüllbare 2-teilige Wärmezuführungseinheit aufweist.

Weiter wird auf die GB 2 039 670 A hingewiesen, welche eine Vorrichtung zur Festlegung auf der Oberfläche eines Rohrs beschreibt. Auch wird auf die US 5,226,753 A verwiesen, welche eine ähnliche Vorrichtung zeigt.

Der Vollständigkeit halber wird auch auch die DE 40 28 158 A1, die DE 41 12 484 A1 und die DE 44 05 155 A1 hingewiesen, welche verschiedene Ausführungen von Kupplungen zur Kupplung von Rohren aufzeigen.

Positionsgeber werden üblicherweise durch Madenschrauben mit der Welle verbunden.

### Aufgabe der Erfindung

Aufgabe der vorliegenden Erfindung ist es, eine einfache zu bedienende und sichere Kupplung zum Festlegung eines Positionsgeberes auf einer Welle vorzusehen.

### Lösung der Aufgabe

### Zur Lösung der Aufgabe führen die Merkmale nach dem Anspruch 1

Als Medium kommt vor allem Luft, aber auch jedes beliebige andere Medium in Betracht. Luft hat den Vorteil, dass sie billig und im industriellen Bereich als Druckluft meist verfügbar ist. Der Grundgedanke der vorliegenden Erfindung besteht darin, dass nach dem Aufsetzen des flexiblen Rings zusammen mit dem Positionsgeber auf die Welle die Kammer mit dem Medium gefüllt wird, so dass sich der flexible Ring um die Welle legt und so eine Klemmung bewirkt wird. Bevorzugt besteht der Ring aus einem gummiartigen Werkstoff, so dass es zusätzlich zu einer Rutschhemmung kommt.

Zum Anordnen des Ringes weist der Positionsgeber eine Ausnehmung auf. Diese nimmt den flexiblen Ring in sich auf, wobei in der Ausnehmung ein Innenring vorgesehen ist. Dieser Innenring bildet beidseits zur Ausnehmung hin eine Ringschulter aus, die vor allem einer später beschriebenen Abdichtung dient.

Des weiteren ist der Innenring nicht einteilig ausgebildet, sondern besteht aus mehreren Segmentschalen, die durch Schlitze voneinander getrennt sind.

Der flexible Ring wird nun in die Ausnehmung des Positionsgeberes eingesetzt, wobei zwei umlaufende Flanschen an Ringschultern des Innenringes in der Ausnehmung anschlagen. Benachbart zu diesen umlaufenden Flanschen sind ebenfalls in dem flexiblen Ring Endringe vorgesehen, welche sich zwischen einem Kammerring ausbilden, jedoch diesen Kammerring etwas in Abstand von einer Innenfläche des Innenrings der Ausnehmung halten. Hierdurch wird gewährleistet, dass die Luft sich besser ringförmig um die Welle bzw. in dem flexiblen Ring verteilt.

Des weiteren sind dem flexiblen Ring beidseits Stützstege angeformt, welche in etwa senkrecht zu den umlaufenden Flanschen verlaufen. Diese Stützstege greifen in Gebrauchslage in die oben erwähnten Schlitze des Innenrings bzw. zwischen die Segmentschalen ein, so dass nunmehr der flexible Ring gegenüber dem Innenring festliegt.

Als nächstes werden jeweils von Aussen her Stützringe in die Ausnehmung des Positionsgeberes eingesetzt, wobei jeder Stützring einen Aussenflansch und einen Ringeinschub aufweist. Mit dem Ringeinschub gleitet der Stützring in den flexiblen Ring, während der Aussenflansch dann auf den umlaufenden Flanschen des flexiblen Rings anschlägt. Er presst diese umlaufenden Flansche gegen die oben erwähnten Ringschultern, wodurch die Dichtwirkung erzielt wird.

Jetzt muss nur noch eine Öffnung zum Einbringen eines Mediums in der Ausnehmung vorgesehen sein, die in die zwischen Kammerring und Innenring gebildete Ringkammer einmündet. Ein Medium kann eingebracht werden, was bewirkt, dass sich der Kammerring nach innen aufwölbt und die Welle dicht umschliesst.

Sollte der Innendurchmesser des flexiblen Rings und ein Aussendurchmesser der Welle nicht übereinstimmen, so ist eine Adapterhülse vorgesehen, deren Aussendurchmesser dem Innendurchmesser des flexiblen Rings und deren Innendurchmesser dem Aussendurchmesser der Welle entspricht. Diese Hülse wird beispielsweise mit einer Madenschraube auf der Welle festgelegt.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Figur 1: eine Draufsicht auf einen Positionsgeber mit einer erfindungsgemässen Vorrichtung zum Festlegen dieses Positionsgeberes auf einer Welle;
- Figur 2: einen Querschnitt durch den Positionsgeber mit der erfindungsgemässen Vorrichtung zum Festlegen dieses Positionsgeberes auf einer Welle gemässe Figur 1 entlang Linie A-A;
- Figur 3: eine Explosionsdarstellung der erfindungsgemässen Vorrichtung zum Festlegen des Positionsgebers;
- Figur 4: eine Draufsicht auf den Positionsgeber ohne erfindungsgemässen Vorrichtung zum Festlegen dieses Positionsgebers;
- Figur 5: einen vergrössert dargestellten Ausschnitt aus Figur 2 im eingekreisten Bereich.

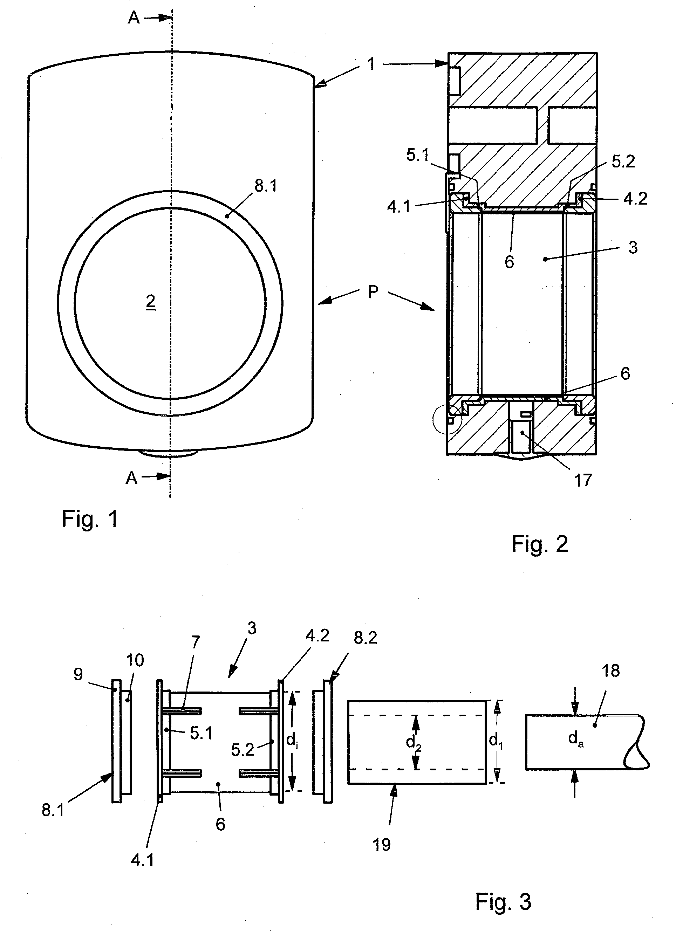

Ein Positionsgeber weist gemäss den Figuren 1 und 2 ein Gehäuse 1 auf, das eine Öffnung 2 zur Aufnahme einer in Figur 3 gezeigten Welle18 ausbildet. In dieser Öffnung 2 ist eine erfindungsgemässe Vorrichtung P zum Festlegen des Drehgebers auf der Welle angeordnet. Diese Vorrichtung P weist einen flexiblen Ring 3 auf, wie er insbesondere in Figuren 2 und 3 gezeigt ist. Dieser flexible Ring 3 wird nach aussen hin von jeweils einem umlaufenden Flansch 4.1 bzw. 4.2 begrenzt, wobei an jedem Flansch 4.1 und 4.2 nach innen hin Endringe 5.1 bzw. 5.2 anschliessen, zwischen denen ein Kammerring 6 angeordnet ist. Des weiteren übergreifen Stützstege 7 sowohl Endringe 5.1, 5.2, wie auch zumindest teilweise den Kammerring 6.

Der gesamte flexible Ring 3 ist vorzugsweise einstückig ausgeformt und besteht aus einem gummiartigen Werkstoff.

Beidseits sind gemäss Figur 3 dem flexiblen Ring 3 jeweils Stützringe 8.1 bzw. 8.2 zugeordnet, wobei jeder Stützring 8.1 bzw. 8.2 aus einem Aussenflansch 9 und einem Ringeinschub 10 besteht.

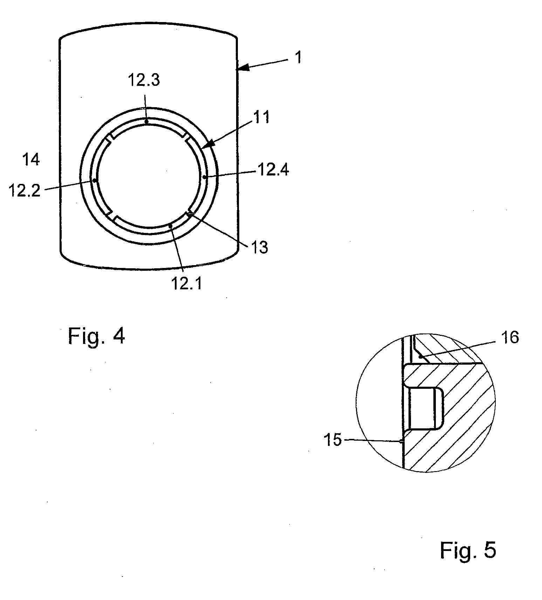

Die Öffnung 2 in dem Gehäuse 1 wird von einer in Figur 4 angedeuteten ringförmigen Ausnehmung 11 gebildet, in der ein Innenring vorgesehen ist. Dieser besteht aus vier Segmentschalen 12.1 bis 12.4, die jeweils durch einen Schlitz 13 voneinander getrennt sind und zur Ausnehmung 11 hin eine Ringschulter 14 ausbilden.

Die Funktionsweise der vorliegenden Erfindung ist folgende:
In das Gehäuse 1, welches die Ausnehmung 11 aufweist, wird der flexible Ring 3 eingesetzt. Dabei greifen die Stützstege 7 in die Schlitze 13 ein, so dass der flexible Ring gegenüber dem Gehäuse 1 drehfest festgelegt ist. Die beiden Flanschen 4.1 und 4.2 liegen der jeweiligen Ringschulter 14 des Innenrings an.

Nunmehr werden von beiden Seiten her die Stützringe 8.1 und 8.2 in den flexiblen Ring 3 eingesetzt, wobei die Ringeinschübe 10 in den flexiblen Ring 3 eingleiten. Die Aussenflansche 9 schlagen an den Flanschen 4.1 und 4.2 an und drücken diese gegen die Ringschultern 14. Die Festlegung der Stützringe 8.1 und 8.2 in der Ausnehmung 11 kann beispielsweise durch Verkleben aber auch mechanisch durch Vernieten geschehen, wobei Randbereiche 15 des Gehäuses, wie in Figur 5 angedeutet, gegen die Stützringe 8.1 und 8.2 gebogen werden. Zum besseren Halt dient hier auch eine Fase 16, welche dem Stützring 8.1 bzw. 8.2 angeformt ist.

Nunmehr kann das Gehäuse 1 zusammen mit der erfindungsgemässen Vorrichtung auf eine Welle 18 aufgesetzt werden, wobei die Welle von dem Ring 3 umfangen wird. Über ein Ventil 17 wird Luft in den Bereich zwischen Kammerring 6 und dem aus den Segmentschalen 12.1 bis 12.4 bestehenden Innenring eingebracht, so dass der Kammerring 6 aufgeblasen wird und sich der Welle anlegt. Damit sitzt die Vorrichtung P bzw. das Gehäuse 1 drehfest auf der Welle auf.

Sollte der flexible Ring 3 einen Innendurchmesser di aufweisen, der grösser ist, als ein Aussendurchmesser da einer Welle 18, so wird eine Adapterhülse 19 vorgesehen, wie sie in Figur 3 angedeutet ist. Diese besitzt einen Aussendurchmesser d1 welche dem Innendurchmesser di des flexiblen Rings 3 entspricht und einen Innendurchmesser d2, welcher dem Aussendurchmesser da der Welle 8 entspricht.

**Bezugszeichenliste**

| | | | | | |
|---|---|---|---|---|---|
| 1 | Gehäuse | 34 | | 67 | |
| 2 | Offnung | 35 | | 68 | |
| 3 | Ring | 36 | | 69 | |
| 4.1 4.2 | Flansch | 37 | | 70 | |
| 5.1 5.2 | Endring | 38 | | 71 | |
| 6 | Kammerring | 39 | | 72 | |
| 7 | Stützsteg | 40 | | 73 | |
| 8.1 8.2 | Stützring | 41 | | 74 | |
| 9 | Aussenflansch | 42 | | 75 | |
| 10 | Ringeinschub | 43 | | 76 | |
| 11 | Ausnehmung | 44 | | 77 | |
| 12.1-12.4 | Segmentschalen | 45 | | 78 | |
| 13 | Schlitz | 46 | | 79 | |
| 14 | Ringschulter | 47 | | | |
| 15 | Randbereich | 48 | | P | Vorrichtung |
| 16 | Fase | 49 | | Di | Innendurchmesser |
| 17 | Ventil | 50 | | Da | Aussendurchmesser |
| 18 | Welle | 51 | | D1 | Aussendurchmesser |
| 19 | Adapterhülse | 52 | | D2 | Innendurchmesser |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Festlegen/Festklemmen eines Positionsgeberes (1) auf einer Welle (18),wobei ein flexibler Ring (3) zum Aufsetzen auf die Welle (18) vorgesehen ist, der mit dem Positionsgeber (1) zumindest eine mit einem Medium befüllbare Kammer ausbildet, wobei der Positionsgeber (1) eine Ausnehmung (11) zur Aufnahme des flexiblen Rings (3) aufweist, wobei in der Ausnehmung (11) ein Innenring (12.1 bis 12.4) vorgesehen ist..
**dadurch gekennzeichnet,**
**dass** der Innenring (12.1 bis 12.4) beidseits zur Ausnehmung (11) hin eine Ringschulter (14) ausbildet, wobei der Innenring aus mehreren Segmentschalen besteht, die jeweils durch einen Schlitz (13) voneinander getrennt sind.

2. Vorrichtung nach Anspruch 1, **dadurch gekennzeichnet, dass** der Innenring durch Schlitze (13) in Segmentschalen (12.1 bis 12.4) unterteilt ist.

3. Vorrichtung nach Anspruch 1 oder 2, **dadurch gekennzeichnet, dass** an den flexiblen Ring (3) beidseits umlaufende Flansche (4.1, 4.2) angeformt sind, die der Anlage an die Ringschultern (14) dienen.

4. Vorrichtung nach einem der Ansprüche 1 bis 3, **dadurch gekennzeichnet, dass** dem flexiblen Ring (3) beidseits Endringe (5.1, 5.2) angeformt sind, welche einen Kammerring (6) in Abstand von dem Innenring halten.

5. Vorrichtung nach einem der Ansprüche 1 bis 4, **dadurch gekennzeichnet, dass** dem flexiblen Ring (3) Stützstege (7) zugeordnet sind.

6. Vorrichtung nach einem der Ansprüche 1 bis 5, **dadurch gekennzeichnet, dass** dem flexiblen Ring (3) beidseits ein Stützring (8.1, 8.2) zugeordnet ist.

7. Vorrichtung nach Anspruch 6, **dadurch gekennzeichnet, dass** jeder Stützring (8.1, 8.2) mit einem Aussenflansch (9) an einem umlaufenden Flansch (4.1, 4.2) des flexiblen Rings (3) anliegt und mit einem Ringeinschub (10) in den flexiblen Ring (3) eingreift.

8. Vorrichtung nach einem der Ansprüche 1 bis 7, **dadurch gekennzeichnet, dass** ihn die Ausnehmung (11) einer Öffnung zum Einbringen eines Mediums einmündet.

9. Vorrichtung nach einem der Ansprüche 1 bis 8, **dadurch gekennzeichnet, dass** dem flexiblen Ring (3) eine Adapterhülse (19) zugeordnet ist, deren Aussendurchmesser (d1) dem Innendurchmesser (di) des flexiblen Rings (3) und deren Innendurchmesser (d2) dem Aussendurchmesser (da) der Welle (18) entspricht.

## Claims

1. Device for fixing/clamping a position sensor (1) on a shaft (18), wherein a flexible ring (3) is provided for placing on the shaft (18), which ring forms with the position sensor (1) at least one chamber fillable with a medium, the position sensor (1) having a cutout (11) for receiving the flexible ring (3), an inner ring (12.1 to 12.4) being provided in the cutout (11)..
**characterised**
**in that** the inner ring (12.1 to 12.4) forms a ring shoulder (14) on both sides towards the cutout (11), the inner ring consisting of a plurality of segment shells which are each separated from one another by a slot (13).

2. Device according to Claim 1, **characterised in that** the inner ring is subdivided into segment shells (12.1 to 12.4) by slots (13).

3. Device according to Claim 1 or 2, **characterised in that** circumferential flanges (4.1, 4.2) are formed on both sides on the flexible ring (3), the flanges serving to bear on the ring shoulders (14).

4. Device according to one of Claims 1 to 3, **characterised in that** end rings (5.1, 5.2) are formed on both sides of the flexible ring (3), the end rings keeping a chamber ring (6) at a distance from the inner ring.

5. Device according to one of Claims 1 to 4, **characterised in that** supporting webs (7) are assigned to the flexible ring (3).

6. Device according to one of Claims 1 to 5, **characterised in that** a supporting ring (8.1, 8.2) is assigned to the flexible ring (3) on both sides.

7. Device according to Claim 6, **characterised in that** each supporting ring (8.1, 8.2) bears, with an outer flange (9), on a circumferential flange (4.1, 4.2) of the flexible ring (3) and engages, with a ring insert (10), in the flexible ring (3).

8. Device according to one of Claims 1 to 7, **characterised in that** him the cutout (11) of an opening for introducing a medium opens.

9. Device according to one of Claims 1 to 8, **characterised in that** the flexible ring (3) is assigned an adapter sleeve (19), the outside diameter (d1) of which corresponds to the inside diameter (di) of the flexible ring (3) and the inside diameter (d2) of which corresponds to the outside diameter (da) of the shaft (18).

## Revendications

1. Dispositif de fixation/serrage d'un indicateur de position (1) sur un arbre (18), pour le placement sur l'arbre (18) étant prévue une bague flexible (3) qui forme avec l'indicateur de position (1) au moins une chambre pouvant être remplie d'un fluide, l'indicateur de position (1) présentant un évidement (11) destiné à recevoir l'anneau flexible (3), dans l'évidement (11) étant prévue une bague intérieure (12.1 à 12.4),
**caractérisé par le fait**
**que** la bague intérieure (12.1 à 12.4) constitue, des deux côtés de l'évidement (11), un épaulement annulaire (14), la bague intérieure étant constituée de plusieurs coquilles segmentaires séparées, chacune, par une fente (13).

2. Dispositif selon la revendication 1, **caractérisé par le fait que** la bague intérieure est divisée par des fentes (13) en coquilles segmentaires (12.1 à 12.4).

3. Dispositif selon la revendication 1 ou 2, **caractérisé par le fait que** sur la bague flexible (3) sont formées, des deux côtés, de brides périphériques (4.1, 4.2) qui servent à l'appui contre les épaulements annulaires (14).

4. Dispositif selon l'une des revendications 1 à 3, **caractérisé par le fait que** sur la bague flexible (3) sont formées, des deux côtés, des bagues d'extrémité (5.1, 5.2) qui maintiennent une bague de chambre (6) à une distance de la bague intérieure.

5. Dispositif selon l'une des revendications 1 à 4, **caractérisé par le fait qu'**à la bague flexible (3) sont associées des entretoises de support (7).

6. Dispositif selon l'une des revendications 1 à 5, **caractérisé par le fait qu'**à la bague flexible (3) est associée, des deux côtés, une bague de support (8.1, 8.2).

7. Dispositif selon la revendication 6, **caractérisé par le fait que** chaque bague de support (8.1, 8.2) s'appuie par une bride extérieure (9) sur une bride périphérique (4.1, 4.2) de la bague flexible (3) et s'engage par un insert annulaire (10) dans la bague flexible (3).

8. Dispositif selon l'une des revendications 1 à 7, **caractérisé par le fait que** dans l'évidement (11) aboutit une ouverture pour l'introduction d'un fluide.

9. Dispositif selon l'une des revendications 1 à 8, **caractérisé par le fait qu'**à la bague flexible (3) est associée une douille d'adaptation (19) dont le diamètre extérieur (dl) correspond au diamètre intérieur (di) de la bague flexible (3) et dont le diamètre intérieur (d2) correspond au diamètre extérieur (da) de l'arbre (18).
